# EUROPEAN PATENT SPECIFICATION

(11) **EP 2 899 447 B1**
(45) Date of publication and mention of the grant of the patent: **16.11.2016**
(21) Application number: 15151602.8
(22) Date of filing: 19.01.2015
(51) Int. Cl.: F16L 59/14, F16L 59/02, A62C 3/16, H02G 3/04

(54) **PIPE ELEMENT FOR INSULATING AT LEAST ONE PIPE**
ROHRELEMENT ZUM ISOLIEREN VON MINDESTENS EINEM ROHR
ÉLÉMENT DE TUYAU POUR ISOLER AU MOINS UN TUYAU

(30) Priority: 27.01.2014 FI 20145076
(43) Date of publication of application: 29.07.2015
(73) Proprietor: Pipe-Modul Oy, 50150 Mikkeli (FI)
(72) Inventor: Partanen, Vesa, 50100 Mikkeli (FI)
(74) Representative: Berggren Oy Ab

(56) References cited:
- EP-A1- 0 544 419
- EP-A1- 1 870 628
- EP-A2- 0 869 303
- US-A1- 2010 193 238

## Description

### Technical field

The application relates generally to a pipe element for insulating at least one pipe.

### Background

Traditionally, the plumbing renovation of a building has been carried out by disconnecting the building's water and power supply, as well as by dismantling the structures for replacing old pipes with new ones. The renewal of pipes has possibly been accompanied also by cable laying operations, for example by repairing the power cable system and by installing data cables, whereby the renovation has taken a long time and thereby becomes also expensive in terms of labor and material costs.

Living in the building is difficult during renovation as water and power supply is disconnected for long periods of time. For example, for families with children and for the elderly, the living during renovation is practically impossible, the only alternative being to move away from the building for as long as the renovation lasts, which further increases renovation costs.

Additional drawbacks of traditional plumbing renovation include sloppy workmanship, inconsistency of quality, and the outright lack of skill as a result of the free mobility of workforce.

One example of a pipe element is Pipe-Modul Oy's pipe element, which comprises the features disclosed in the preamble of the independent claim.

Other examples are disclosed in applications EP 1870628, EP 0544419, EP 0869303, and US 2010/0193238.

### Summary

It is one objective of the invention to eliminate problems of the prior art, as well as to introduce a pipe element intended for building overhaul and new construction, by means of which the installation of pipes is easy, swift and economical.

One objective of the invention is fulfilled by a pipe element according to the independent claim.

According to one embodiment, the pipe element for insulating at least one pipe comprises a base member, which enables attachment of the pipe element to a mounting surface and which comprises an outer shell made up of a flat segment and sidewall segments, a first pipe insulation fitted against an internal surface of the outer shell's flat segment and having its outer surface formed with at least one groove for installing at least one pipe in the pipe element, and a first sidewall insulation fitted against one of the sidewall segments, in which base member the outer shell has its ends adapted to bend over the first pipe insulation and sidewall insulation and wherein between the pipe insulation and the sidewall insulation is left a space for installing at least one power or telecommunications cable in the pipe element. The pipe element includes a cover member, which is adapted for attachment to the base member and which comprises an outer shell made up of a flat segment and sidewall segments, as well as a second pipe insulation fitted at least against an internal surface of the outer shell's flat segment and having its outer surface formed with at least one groove for installing the at least one pipe in the pipe element, in which cover
member the outer shell has its ends adapted to bend into a position co-directional with the ends of the base member's outer shell and wherein between the pipe insulation and one of the sidewall segments is left a space for installing the at least one power or telecommunications cable in the pipe element. When the cover member is in attachment with the base member, the space is protected with a continuous fireproof insulation barrier, said fireproof insulation barrier including base member's fireproof insulations and a cover member's fireproof insulation.

Other embodiments are presented in the dependent claims.

### Brief description of the figures

Embodiments of the invention will be explained more fully in the detailed description of the figures with reference to the accompanying figures, in which
- figs. 1a-1c: show an opened and closed pipe element according to a first embodiment in a perspective view and in cross-sections with details,
- fig. 2: shows a closed pipe element according to a second embodiment in cross-section.

### Detailed description of the figures

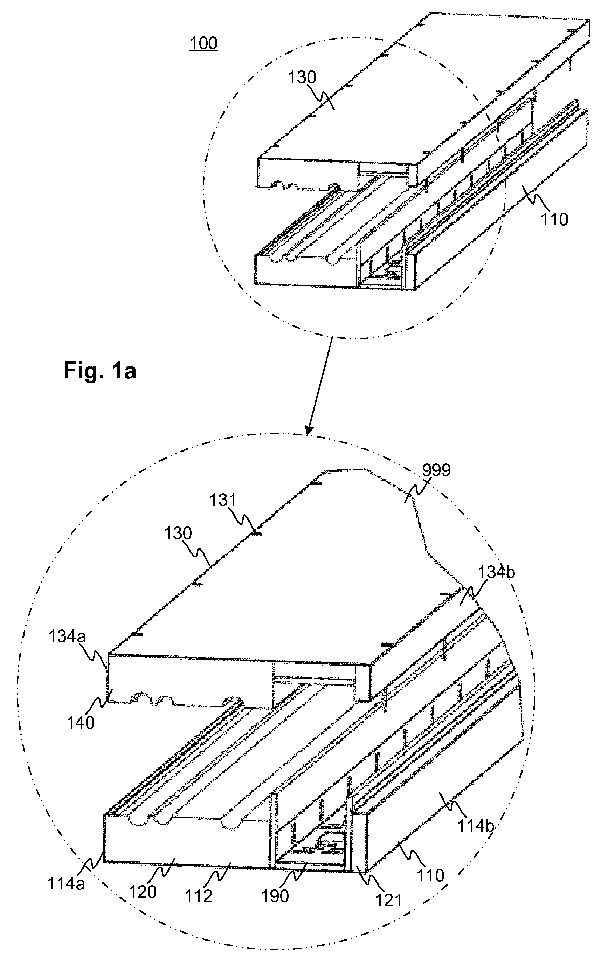

In figs. 1a-1c is shown a pipe element 100, which is intended for insulating at least one pipe, for example a water pipe, a pipe associated with a waste heat recovery unit (WHRU), a solar collector tube, a pipe used in a refrigeration unit, or a pipe used in process industry, and which comprises a base member 110 enabling attachment of the pipe element 100 to a mounting surface, and a cover member 130 adapted for attachment to the base member 110.

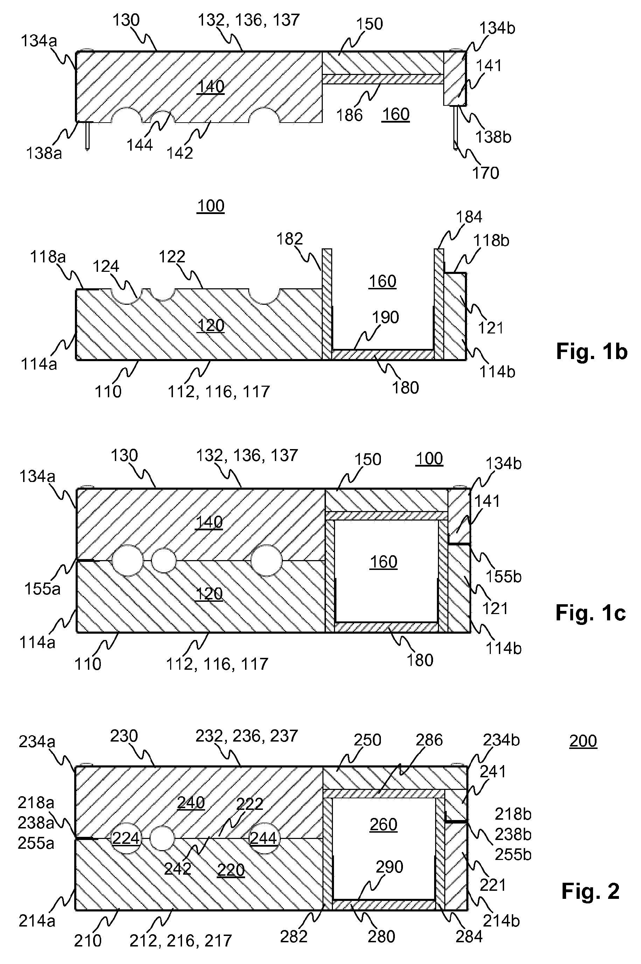

Fig. 1 a shows the pipe element 100 with its cover member 130 lifted off the base member 110. The base member 110 is first installed on a mounting surface, for example on a building's exterior wall, indoors on a hallway wall or on an apartment wall, and the base member can be attached to the wall by means of fasteners extending therethrough, for example wood or sheet metal screws.

Pipes are mounted on pipe supports, which are present in grooves 124 and not shown in the figures, and power and telecommunications cables on attachment elements 190 intended therefor, followed by securing the cover member 130 to a closed position to complete the installation. The pipe elements 100 can have pipe supports pre-fitted as early as at the factory, prior to the installation on a mounting surface, or as late as at the installation site.

The cover member 130, including a pipe insulation 140, can be attached from the direction of a flat segment 132 of the cover member 130 to the base member 110 by means of fasteners 170 extending therethrough co-directionally with sidewall segments 134a, 134b of the cover member 130. The fasteners 170 can be for example wood screws that can be covered with concealment plugs for visual appearance. An outer shell 136 is provided with holes 131 for the fasteners 170.

As shown in the figures, pipe insulations 120, 140 can be formed of a single unitary piece of insulation or several pieces of insulation.

The pipe element 100, as also a second embodiment to be presented hereinafter, can have dimensions for example as follows: width 350 or 400 mm contingent on the number of pipes, height 120, 160 or 180 mm, and length 2000, 2500 or 3000 mm. Alternatively, it can also be manufactured to other dimensions of width, height and length, and these may vary considerably according to intended use.

The insulation of water pipes, for example, can be implemented modularly from sections of pipe elements 100, which are joined together. In all sections, however, the pipe element 100 has an identical installation-friendly basic construction, possibly varying just in terms of dimensions and shapes. Various shapes may include for example corner pieces, T-branches and the like.

By virtue of a modular design and surface-mounted installation, the plumbing renovations can be conducted in an easy, swift and economical manner as a rule without dismantling the existing structures. By virtue of swiftness, it is possible to live in a building under renovation with only short disruptions in water supply during connection.

In addition to modularity, it is also the openability of the pipe element 100 which enables, in accordance with a life cycle concept, easy repair and maintenance operations for pipes as well as, when the service life of pipes comes to an end, an easy renewal thereof.

The openability of the pipe element 100 further enables an easy addition of power and telecommunications cables any time a housing company finds it desirable to extend for example fiber cables to apartments.

With reference to figs. 1b and 1c, the construction of the pipe element 100 will be described in more detail.

The base member 110 comprises a substantially U-shaped outer shell 116 consisting of a flat segment 112 and sidewall segments 114a, 114b, and a pipe insulation 120 pre-fitted beforehand against its internal surface 117. The pipe insulation 120 has its outer surface 122 formed with three grooves 124 for installing at least one pipe in the pipe element 100. Contrary to the figures, the number of grooves 124 can also one, two or upwards of three. Each groove 124 is fitted with at least one pipe support for securing a pipe.

Against the second sidewall segment 114b is fitted a sidewall insulation 121 co-directional with the sidewall segment 114b, whereby between the pipe insulation 120 and the sidewall insulation 121 is left a space 160 to accommodate installation of at least one power and/or telecommunications cable therein.

As shown in the figures, the outer shell 116 has its ends 118a, 118b adapted to bend at junctions 155a, 155b over the pipe insulation 120 and the sidewall insulation 121 to a position substantially perpendicular to the sidewall segments 114a, 114b co-directionally with the flat segment 112. The outer shell has its second end 118b further adapted to bend to a position substantially perpendicular to the flat segment 112 - away from it - co-directionally with the sidewall segment 114b so as to bring the second end 118b against a sidewall insulation 141 of the cover member 130 when the cover member 130 is in attachment with the base member 110.

The base member 110 is further provided with a first fireproof insulation 180 fitted against the internal surface 117 of the flat segment 112 and extending co-directionally with the flat segment 112, with a second fireproof insulation 182 fitted against the pipe insulation 120 and extending co-directionally with the sidewall segment 114b, and with a third fireproof insulation 184 fitted against the sidewall insulation 121 and extending co-directionally with the sidewall segment 114b. The third fireproof insulation 184 is fitted against the junction 155b of the base member 110 and the cover member 130 when the cover member 130 is in attachment with the base member 110.

The cover member 130 is adapted for attachment with the base member 110 and comprises a substantially U-shaped outer shell 136 made up of a flat segment 132 and sidewall segments 134a, 134b, as well as a second pipe insulation 140 fitted at least against an internal surface 137 of the flat segment 132. The pipe insulation 140 has its outer surface 142 formed with a number of grooves 144 matching the number of grooves 124 in the base member 110 for at least one pipe. The outer shell 136 has both of its ends 138a, 138b adapted to bend into a co-directional relationship with the ends 118, 118 of the base member's 110 outer shell 116.

The outer shells 116, 136 are made from zinc-plated sheet metal, for example from zinc-coated steel sheet or other sheet metal, or optionally from electro zinc coated steel sheet. Alternatively, it is also possible to use coated or prepainted sheet metal.

The cover member 130 is further provided with a flat insulation 150 fitted against the flat segment's 132 internal surface 137 and extending co-directionally with the flat segment 132, and with a sidewall insulation 141 fitted against the sidewall segment 134b and extending co-directionally with the sidewall segment 134b, thus creating between the pipe insulation 140 and the sidewall insulation 141 a space 160 feasible for utilization in the installation of power and/or telecommunications cables.

The flat insulation 150 has one of its side edges against the pipe insulation 140, its top edge against the flat segment's 132 internal surface 137, and its other side edge against the second sidewall segment 134b. The sidewall insulation 141, on the other hand, lies against the second sidewall segment 134b by having one of its side edges against a deflected end 138b of the sidewall segment 134b and its other side edge against the flat segment's 132 internal surface 137.

The cover member 130 is further provided with a fourth fireproof insulation 186 fitted against the flat insulation 150 and extending co-directionally with the flat segment 132 and having its side edges against the pipe insulation 140 and the sidewall insulation 141.

When the cover member 130 is in attachment with the base member 110, the space 160 left between the pipe insulations 120, 140 and the sidewall insulations 121, 141 is protected by a continuous fireproof insulation barrier 180, 182, 184, 186, including the fireproof insulations 180, 182, 184 of the base member 110 and the fireproof insulation 186 of the cover member 130, and by virtue of that the space 160 satisfies the strict fire safety regulations.

The pipe insulations 120, 140, the sidewall insulations 121, 141, and the flat insulation are made of wool, and the fireproof insulations 180, 182, 184, 186 are made of gypsum board or magnesite board.

The fire insulated space 160 is provided with attachment elements 190 for securing at least one power and/or telecommunications cable to the pipe element 100. The attachment elements 190 comprise at least one substantially U-shaped support plate 190, which is fitted against the fireproof insulations 180, 182, 184 of the base member 110.

By virtue of the space 160 and the support plate(s) 190, the installation of new power and/or telecommunications cables interferes minimally with the normal function of services under renovation.

Fig. 2 shows a pipe element 200 for insulating at least one pipe, whose functions, dimensions, benefits and materials are consistent with those of the pipe element 100 shown in figs. 1a-1c.

A base member 210 comprises a substantially U-shaped outer shell 216 made up of a flat segment 212 and sidewall segments 214a, 214b, and a pipe insulation 220 fitted against its internal surface 217. Its outer surface 222 is formed with three grooves 224 for installing at least one pipe, and the number of grooves 224 can also be one, two or upwards of three. Each groove 224 is fitted with at least one pipe support for fastening a pipe.

Against one sidewall segment 214b is fitted a sidewall insulation 221 co-directional with the sidewall segment 214b, whereby between the pipe insulation and the sidewall insulation 221 is left a space 260, accommodating the installation of a power and/or telecommunications cable(s) therein.

The outer shell 216 has its ends 218a, 218b adapted to bend at junctions 255a, 255b over the pipe insulation 220 and the sidewall insulation 221 to a position substantially perpendicular to the sidewall segments 214a, 214b to extend co-directionally with the flat segment 212. In addition, the outer shell has its second end 218b adapted to bend to a position substantially perpendicular to the flat segment 212 to extend co-directionally with the sidewall segment 214b.

The base member 210 is further provided with a first fireproof insulation 280 fitted against the internal surface 217 of the flat segment 212 and extending co-directionally with the flat segment 212, a second fireproof insulation 282 fitted against the pipe insulation 220 and extending co-directionally with the sidewall segment 214b, and a third fireproof insulation 284 fitted against the sidewall insulation 221 and extending co-directionally with the sidewall segment 214b. The third fireproof insulation is fitted against the junction 255b of the cover member 130 and the base member 110.

The cover member 230 is adapted for attachment with the base member 210 and comprises a substantially U-shaped outer shell 236 made up of a flat segment 232 and sidewall segments 234a, 234b, as well as a pipe insulation 240 fitted at least against an internal surface 237 of the flat segment 232. The pipe insulation 240 has its outer surface 242 formed with a number of grooves 244 matching the number of grooves 224 in the base member 210. The outer shell 236 has both of its ends 238a, 238b adapted to bend to a position co-directional with the ends 218a, 218b of the base member's 210 outer shell 216.

The cover member 230 is further provided with a flat insulation 250 fitted against the flat segment's 232 internal surface 237 and extending co-directionally with the flat segment 232, and with a sidewall insulation 241 fitted against the sidewall segment 234b and extending co-directionally with the sidewall segment 234b, thus creating between the pipe insulation 240 and the sidewall insulation 241 a space 260 feasible for utilization in the installation of power and/or telecommunications cables.

The flat insulation 250 has one of its edges fitted against the pipe insulation 240, its top edge against the flat segment's 232 internal surface 237, and its other side edge against the sidewall insulation 241 which, on the other hand, is fitted against the second sidewall segment 234b so as to have one of its side edges against a deflected end 238b of the sidewall segment 234b and its other side edge against the flat insulation 250.

The cover member 230 is further provided with a fourth fireproof insulation 286 fitted against the flat insulation 250 and extending co-directionally with the flat segment 232 and having its side edges against the pipe insulation 240 and the sidewall insulation 241.

The uniformly fire insulated space 260 contains at least one support plate 290, which is fitted against the fireproof insulations 280, 282, 284.

It is possible that the pipe elements 100, 200 be even further supplemented, co-directionally with the sidewall segments 114a, 114b, 214a, 214b between the pipe insulation 120, 220 as well as the fireproof insulation 182, 282 - against the internal surface 117, 217 of the base member's 110, 210 outer shell 116, 216 - with a first extra insulation made of wool which can be the same as or wool which is different from that of the pipe insulation 120, 220. In this case, there would be placed on top of the first extra insulation, against the same co-directionally with the sidewall segments 134a, 134b, 234a, 234b between the pipe insulation 140, 240 as well as the flat insulation 150, 250 and the fireproof insulations 182, 282, 186, 286 - against the internal surface 137, 237 of the cover member's 130, 230 outer shell 136, 236 - a second extra insulation also made of wool which can be the same as or wool which is different from that of the pipe insulation 140, 240.

Described above are just a few embodiments of the invention. The principle according to the invention can be naturally varied within the scope of protection defined by the claims, regarding for example implementation details as well as fields of use.

## Claims

1. A pipe element (100, 200) for insulating at least one pipe, said pipe element comprising
a base member (110, 210), which enables attachment of the pipe element to a mounting surface and which comprises an outer shell (116, 216) made up of a flat segment (112, 212) and sidewall segments (114a, 114b, 214a, 214b), a first pipe insulation (120, 220) fitted against an internal surface (117, 217) of the outer shell's flat segment and having its outer surface (122, 222) formed with at least one groove (124, 224) for installing at least one pipe in the pipe element, and a first sidewall insulation (121, 221) fitted against the second sidewall segment (114b), in which base member the outer shell has its ends (118a, 118b, 218a, 218b) adapted to bend over the first pipe insulation and sidewall insulation and wherein between the pipe insulation and the sidewall insulation is left a space (160, 260) for installing at least one power or telecommunications cable in the pipe element, and
a cover member (130, 230), which is adapted for attachment to the base member and which comprises an outer shell (136, 236) made up of a flat segment (132, 232) and sidewall segments (134a, 134b, 234a, 234b), as well as a second pipe insulation (140, 240) fitted at least against an internal surface (137, 237) of the outer shell's flat segment and having its outer surface (142, 242) formed with at least one groove (144, 244) for installing the at least one pipe in the pipe element, in which cover member the outer shell has its ends (138a, 138b, 238a, 238b) adapted to bend into a position co-directional with the ends of the base member's outer shell and wherein between the second pipe insulation and the second sidewall segment (134b) is left a space for installing the at least one power or telecommunications cable in the pipe element,
**characterized in that**
when the cover member is in attachment with the base member, the space (160, 260) is protected with a continuous fireproof insulation barrier (180, 182, 184, 186, 280, 282, 284, 286), said fireproof insulation barrier including base member's fireproof insulations (180, 182, 184, 280, 282, 284) and a cover member's fireproof insulation (186, 286).

2. A pipe element according to claim 1, wherein the cover member is further provided with a flat insulation (150, 250) fitted against the flat segment's internal surface and extending co-directionally with the flat segment, and with a second sidewall insulation (141, 241) fitted against the sidewall segment and extending co-directionally with the sidewall segment.

3. A pipe element according to any of the preceding claims, wherein the base member is provided with a first fireproof insulation (180, 280) fitted against the flat segment's internal surface and extending co-directionally with the flat segment, with a second fireproof insulation (182, 282) fitted against the first pipe insulation and extending co-directionally with the sidewall segment, and with a third fireproof insulation (184, 284) fitted against the first sidewall insulation and extending co-directionally with the sidewall segment, said third fireproof insulation being fitted against a junction (155b) of the base member and the cover member when the cover member is in attachment with the base member, and the cover member is provided with a fourth fireproof insulation (186, 286) fitted against the flat insulation and extending co-directionally with the flat segment.

4. A pipe element according to any of the preceding claims, wherein the pipe insulations (120, 140, 220, 240), the sidewall insulations (121, 141, 221, 241), and the flat insulation are made of wool, and the fireproof insulations (180, 182, 184, 186, 188, 280, 282, 284, 286, 288) are made of gypsum board or magnesite board.

5. A pipe element according to any of the preceding claims, wherein the base member's outer shell has its second end (118b, 218b) adapted to bend into a position substantially perpendicular to the sidewall segment (114b, 214b) co-directionally with the flat segment, as well as, additionally, to a position substantially perpendicular to the flat segment co-directionally with the sidewall segment so as to bring the second end against the second sidewall insulation when the cover member is in attachment with the base member.

6. A pipe element according to any of the preceding claims, which has its space provided with attachment elements (190, 290) for securing at least one power or telecommunications cable to the pipe element, said attachment elements comprising at least one support plate (190, 290) which is fitted against the base member's fireproof insulations.

7. A pipe element (100) according to any of the preceding claims, wherein the flat insulation (150) is fitted against the second pipe insulation (140), the flat segment's (132) internal surface (137) and the second sidewall segment (134b), and the second sidewall insulation (141) is fitted against the second sidewall segment and the flat insulation.

8. A pipe element (200) according to any of the preceding claims, wherein the flat insulation (250) is fitted against the second pipe insulation (240), the flat segment's (232) internal surface (237) and the second sidewall insulation (241), and the second sidewall insulation is fitted against the second sidewall segment (234b) and the flat segment's internal surface.

## Patentansprüche

1. Rohrelement (100, 200) zum Isolieren von mindestens einem Rohr, wobei das Rohrelement Folgendes aufweist:
ein Basisteil (110, 210), welches die Befestigung des Rohrelements an einer Montagefläche ermöglicht und welches eine Außenschale (116, 216), die aus einem flachen Segment (112, 212) und Seitenwandsegmenten (114a, 114b, 214a, 214b) gebildet ist, eine erste Rohrisolation (120, 220), die gegen eine innere Fläche (117, 217) des flachen Segments der Außenschale montiert ist und deren äußere Fläche (122, 222) mit mindestens einer Nut (124, 224) zum Installieren von mindestens einem Rohr in dem Rohrelement ausgebildet ist, und eine ersten Seitenwandisolation (121, 221) aufweist, welche gegen das zweite Seitenwandsegment (114b) montiert ist, bei welchem Basisteil die Enden (118a, 118b, 218a, 218b) der Außenschale dafür angepasst sind, sich über die erste Rohrisolation und Seitenwandisolation zu biegen und wobei zwischen der Rohrisolation und der Seitenwandisolation ein Raum (160, 260) zum Installieren von mindestens einem Strom- oder Telekommunikationskabel in dem Rohrelement freigelassen ist, und
ein Deckelteil (130, 230), welches zur Befestigung an dem Basisteil angepasst ist und welches eine Außenschale (136, 236), die aus einem flachen Segment (132, 232) und Seitenwandsegmenten (134a, 134b, 234a, 234b) gebildet ist, sowie eine zweite Rohrisolation (140, 240) aufweist, die gegen mindestens eine innere Fläche (137, 237) des flachen Segments der Außenschale montiert ist und deren äußere Fläche (142, 242) mit mindestens einer Nut (144, 244) zum Installieren des mindestens einen Rohrs in dem Rohrelement ausgebildet ist, bei welchem Deckelteil die Enden (138a, 138b, 238a, 238b) der Außenschale dafür angepasst sind, sich in eine mit den Enden der Außenschale des Basisteils gleichgerichtete Position zu biegen und wobei zwischen der zweiten Rohrisolation und dem zweiten Seitenwandsegment (134b) ein Raum zum Installieren von mindestens einem Strom- oder Telekommunikationskabel in dem Rohrelement freigelassen ist,
**dadurch gekennzeichnet, dass**,
wenn sich das Deckelteil in Befestigung mit dem Basisteil befindet, der Raum (160, 260) mit einer durchgehenden feuerfesten Isolationsbarriere (180, 182, 184, 186, 280, 282, 284, 286) geschützt ist, wobei die feuerfeste Isolationsbarriere feuerfeste Isolationen (180, 182, 184, 280, 282, 284) des Basisteils und feuerfeste Isolationen (186, 286) des Deckelteils aufweist.

2. Rohrelement nach Anspruch 1, wobei das Deckelteil weiter mit einer flachen Isolation (150, 250), welche gegen die innere Fläche des flachen Segments montiert ist und sich mit dem flachen Segment gleichgerichtet erstreckt, und mit einer zweiten Seitenwandisolation (141, 241) versehen ist, welche gegen das Seitenwandsegment montiert ist und sich mit dem Seitenwandsegment gleichgerichtet erstreckt.

3. Rohrelement nach einem der vorhergehenden Ansprüche, wobei das Basisteil mit einer ersten feuerfesten Isolation (180, 280), welche gegen die innere Fläche des flachen Segments montiert ist und sich mit dem flachen Segment gleichgerichtet erstreckt, mit einer zweiten feuerfesten Isolation (182, 282), welche gegen die erste Rohrisolation montiert ist und sich mit dem Seitenwandsegement gleichgerichtet erstreckt, und mit einer dritten feuerfesten Isolation (184, 284) versehen ist, welche gegen die erste Seitenwandisolation montiert ist und sich mit dem Seitenwandsegment gleichgerichtet erstreckt, wobei die dritte feuerfeste Isolation gegen eine Kontaktstelle (155b) zwischen dem Basisteil und dem Deckelteil montiert ist, wenn das Deckelteil sich in Befestigung mit dem Basisteil befindet, und das Deckelelement mit einer vierten feuerfesten Isolation (186, 286) versehen ist, welche gegen die flache Isolation montiert ist und sich mit dem flachen Segment gleichgerichtet erstreckt

4. Rohrelement nach einem der vorhergehenden Ansprüche, wobei die Rohrisolationen (120, 140, 220, 240), die Seitenwandisolationen (121, 141, 221, 241) und die flache Isolation aus Wolle hergestellt sind, und die feuerfesten Isolationen (180, 182, 184, 186, 188, 280, 282, 284, 286, 288) aus Gipsplatte oder Magnesitplatte hergestellt sind.

5. Rohrelement nach einem der vorhergehenden Ansprüche, wobei das zweite Ende (118b, 218b) der Außenschale des Basisteils dafür angepasst ist, sich in eine Position im Wesentlichen senkrecht zum Seitenwandsegment (114b, 214b) gleichgerichtet mit dem flachen Segment zu biegen, sowie zusätzlich in eine Position im Wesentlichen senkrecht zu dem flachen Segment gleichgerichtet mit dem Seitenwandsegment, um so das zweite Ende gegen die zweite Seitenwandisolation zu bringen, wenn sich das Deckelelement in Befestigung mit dem Basisteil befindet.

6. Rohrelement nach einem der vorhergehenden Ansprüche, wobei dessen Raum mit Befestigungselementen (190, 290) zum Befestigen von mindestens einem Strom- oder Kommunikationskabel an dem Rohrelement bereitgestellt wird, wobei die Befestigungselemente mindestens eine Halteplatte (190, 290) aufweisen, welche gegen die feuerfesten Isolationen des Basisteils montiert sind.

7. Rohrelement (100) nach einem der vorhergehenden Ansprüche, wobei die flache Isolation (150) gegen die zweite Rohrisolation (140), die innere Fläche (137) des flachen Segments (132) und das zweite Seitenwandsegment (134b) montiert ist, und die zweite Seitenwandisolation (141) gegen das zweite Seitenwandsegment und die flache Isolation montiert ist.

8. Rohrelement (200) nach einem der vorhergehenden Ansprüche, wobei die flache Isolation (250) gegen die zweite Rohrisolation (240), die innere Fläche (237) des flachen Segments (232) und die zweite Seitenwandisolation (241) montiert ist, und die zweite Seitenwandisolation gegen das zweite Seitenwandsegment (234b) und die innere Fläche des flachen Segments montiert ist.

## Revendications

1. Élément pour tuyaux (100, 200) servant à isoler au moins un tuyau, ledit élément pour tuyaux comprenant
un élément formant base (110, 210), qui permet la fixation de l'élément pour tuyaux à une surface de montage et qui comprend une coque extérieure (116, 216) constituée d'un segment plat (112, 212) et de segments de paroi latérale (114a, 114b, 214a, 214b), un premier isolant de tuyau (120, 220) placé contre une surface intérieure (117, 217) du segment plat de la coque extérieure et comportant au moins une rainure (124, 224) formée dans sa surface extérieure (122, 222) pour l'installation d'au moins un tuyau dans l'élément pour tuyaux, et un premier isolant de paroi latérale (121, 221) placé contre le second segment de paroi latérale (114b), les extrémités (118a, 118b, 218a, 218b) de la coque extérieure, dans l'élément formant base, étant conçues pour se courber par-dessus les premiers isolant de tuyau et isolant de paroi latérale et un espace (160, 260) restant entre l'isolant de tuyau et l'isolant de paroi latérale pour l'installation d'au moins un câble électrique ou de télécommunication dans l'élément pour tuyaux, et
un élément formant couvercle (130, 230), qui est conçu pour être fixé à l'élément formant base et qui comprend une coque extérieure (136, 236) constituée d'un segment plat (132, 232) et de segments de paroi latérale (134a, 134b, 234a, 234b), ainsi qu'un second isolant de tuyau (140, 240) placé au moins contre une surface intérieure (137, 237) du segment plat de la coque extérieure et comportant au moins une rainure (144, 244) formée dans sa surface extérieure (142, 242) pour l'installation du ou des tuyaux dans l'élément pour tuyaux, les extrémités (138a, 138b, 238a, 238b) de la coque extérieure, dans l'élément formant couvercle, étant conçues pour se courber dans une position de même direction que les extrémités de la coque extérieure de l'élément formant base et un espace restant entre le second isolant de tuyau et le second isolant de paroi latérale (134b) pour l'installation du ou des câbles électriques ou de télécommunication dans l'élément pour tuyaux,
**caractérisé en ce que**
lorsque l'élément formant couvercle est fixé à l'élément formant base, l'espace (160, 260) est protégé au moyen d'une barrière isolante, résistante au feu, continue (180, 182, 184, 186, 280, 282, 284, 286), ladite barrière isolante, résistante au feu comprenant des isolants résistants au feu (180, 182, 184, 280, 282, 284) de l'élément formant base et un isolant résistant au feu (186, 286) de l'élément formant couvercle.

2. Élément pour tuyaux selon la revendication 1, dans lequel l'élément formant couvercle est en outre pourvu d'un isolant plat (150, 250) placé contre la surface intérieure du segment plat et s'étendant dans la même direction que le segment plat, et d'un second isolant de paroi latérale (141, 241) placé contre le segment de paroi latérale et s'étendant dans la même direction que le segment de paroi latérale.

3. Élément pour tuyaux selon l'une quelconque des revendications précédentes, dans lequel l'élément formant base est pourvu d'un premier isolant résistant au feu (180, 280) placé contre la surface intérieure du segment plat et s'étendant dans la même direction que le segment plat, d'un deuxième isolant résistant au feu (182, 282) placé contre le premier isolant de tuyau et s'étendant dans la même direction que le segment de paroi latérale, et d'un troisième isolant résistant au feu (184, 284) placé contre le premier isolant de paroi latérale et s'étendant dans la même direction que le segment de paroi latérale, ledit troisième isolant résistant au feu étant placé contre une jonction (155b) de l'élément formant base et de l'élément formant couvercle lorsque l'élément formant couvercle est fixé à l'élément formant base, et l'élément formant couvercle est pourvu d'un quatrième isolant résistant au feu (186, 286) placé contre l'isolant plat et s'étendant dans la même direction que le segment plat.

4. Élément pour tuyaux selon l'une quelconque des revendications précédentes, dans lequel les isolants de tuyau (120, 140, 220, 240), les isolants de paroi latérale (121, 141, 221, 241), et l'isolant plat sont constitués de laine, et les isolants résistants au feu (180, 182, 184, 186, 188, 280, 282, 284, 286, 288) sont constitués d'une plaque de plâtre ou d'une plaque de magnésite.

5. Élément pour tuyaux selon l'une quelconque des revendications précédentes, dans lequel la seconde extrémité (118b, 218b) de la coque extérieure de l'élément formant base est conçue pour se courber jusqu'à une position essentiellement perpendiculaire au segment de paroi latérale (114b, 214b) dans la même direction que le segment plat, ainsi que, en outre, jusqu'à une position essentiellement perpendiculaire au segment plat dans la même direction que le segment de paroi latérale de façon à amener la seconde extrémité contre le second isolant de paroi latérale lorsque l'élément formant couvercle est fixé à l'élément formant base.

6. Élément pour tuyaux selon l'une quelconque des revendications précédentes, dont l'espace est pourvu d'éléments de fixation (190, 290) permettant d'assujettir au moins un câble électrique ou de télécommunication à l'élément pour tuyaux, lesdits éléments de fixation comprenant au moins une plaque de support (190, 290) qui est placée contre les isolants résistants au feu de l'élément formant base.

7. Élément pour tuyaux (100) selon l'une quelconque des revendications précédentes, dans lequel l'isolant plat (150) est placé contre le second isolant de tuyau (140), la surface intérieure (137) du segment plat (132) et le second segment de paroi latérale (134b), et le second isolant de paroi latérale (141) est placé contre le second segment de paroi latérale et l'isolant plat.

8. Élément pour tuyaux (200) selon l'une quelconque des revendications précédentes, dans lequel l'isolant plat (250) est placé contre le second isolant de tuyau (240), la surface intérieure (237) du segment plat (232) et le second isolant de paroi latérale (241), et le second isolant de paroi latérale est placé contre le second segment de paroi latérale (234b) et la surface intérieure du segment plat.
